# EUROPEAN PATENT APPLICATION

(11) **EP 4 664 647 A1**
(43) Date of publication of application: **17.12.2025**
(21) Application number: 24927582.7
(22) Date of filing: 12.12.2024
(51) Int. Cl.: H01M 50/383, H01M 50/317, H01M 10/48, H01M 50/30, H01M 50/249

(54) **BATTERY CASE, AND BATTERY PACK AND VEHICLE INCLUDING SAME**

(30) Priority: 21.03.2024 KR 20240039335
(71) Applicant: LG Energy Solution, Ltd., Seoul 07335 (KR)
(72) Inventor: PARK, Won Kyoung, Daejeon 34122 (KR); KIM, Jae In, Daejeon 34122 (KR); LEE, Joon Yeong, Daejeon 34122 (KR)
(74) Representative: BCKIP Part mbB
(86) International application number: PCT/KR2024/020279
(87) International publication number: WO 2025/198129

(57) **Abstract**

Disclosed are a battery casing, a battery pack, and a vehicle including the same, the battery casing including a casing body having an internal space in which a battery is embedded, a gas discharge hole formed in the casing body and provided to discharge a gas in the casing body, which is generated from the battery, to the outside of the casing body, and a gas discharge amplifier installed in the gas discharge hole and configured to amplify a flow rate of the gas discharged through the gas discharge hole.

## Description

### [Technical Field]

The present disclosure relates to a battery casing, a battery pack, and a vehicle including the same, the battery casing being capable of quickly discharging a high-temperature, high-pressure battery venting gas, which is generated in a battery pack casing, to the outside to prevent a fire from propagating to a cell or module adjacent to a battery cell with a problem.

### [Background Art]

Recently, a technology for reducing carbon has been actively developed to solve environmental issues such as abnormal atmospheric temperatures. In order to reduce carbon, energy needs to be produced by environmentally friendly methods instead of fossil fuel, the produced energy needs to be stored in the form of electrical energy, and the stored electrical energy needs to be used for vehicles, various types of industrial sites, and homes.

In order to utilize electrical energy while reducing carbon, it is essential to use batteries capable of storing and retrieving electrical energy. Therefore, it is essential to ensure the performance of the battery to sufficiently store electrical energy and use the electrical energy without discomfort.

The battery mainly uses a redox reaction of metal ions. The battery uses metal ions with a high density to improve a capacity of the battery, charging and discharging performance, and efficiency of the battery. Many studies are also being conducted on materials, which constitute electrolytes, and on solid electrolytes and the like. However, there is a general problem in that stability of the battery deteriorates as the performance of the battery is developed.

Batteries used in vehicles, industries, or homes are manufactured in physical units called packs. The battery pack is configured such that a plurality of battery cells is embedded in a battery casing and sealed. The battery pack serves to prevent fire from spreading to the outside even in the event of an accident such as thermal runaway in the battery and protect the battery cells therein so that the battery cells are not degraded by being affected by an external environment, or the battery cells are not physically damaged.

In the battery pack, the plurality of battery cells is embedded in an intermediate form of a module or an assembly (cell module assembly (CMA)). The battery module or the assembly is configured by assembling the plurality of battery cells into one module or assembly. A plurality of modules is fastened into a pack casing, such that the battery pack is completely manufactured. When the battery is maintained, the maintenance may be performed on the unit of the module or the assembly, which facilitates the maintenance.

A plurality of unit battery cells, which constitutes the module or the assembly, includes a positive electrode, a negative electrode, and an electrolyte. Because the battery cell generates heat when the battery cell is charged and discharged, it is necessary to effectively dissipate heat from the battery cell. In addition, the battery module, the assembly, or the battery pack needs to be designed to efficiently dissipate heat to prevent a safety accident.

Meanwhile, the battery may be degraded when the battery is subjected to manufacturing errors, when the battery is excessively charged or discharged, or when the battery ages. Further, when the battery continues to deteriorate, a fire may eventually occur. Therefore, it is necessary to prepare in advance to prevent a fire from occurring in the battery. To this end, it is important to consistently sense a state of the battery and recognize and cope with, in advance, a problem when the problem occurs. In the event of an unexpected problem, it is necessary to minimize damage.

The foregoing explained as the background is intended merely to aid in the understanding of the background of the present disclosure, and is not intended to mean that the present disclosure falls within the purview of the related art that is already known to those skilled in the art.

### [Disclosure]

### [Technical Problem]

The present disclosure has been made in an effort to solve the above-mentioned problem, and an object of the present disclosure is to provide a battery casing, a battery pack, and a vehicle including the same, the battery casing being capable of quickly discharging a gas, which is generated by a fire occurring in some battery cells or modules in a battery pack casing, to the outside of the battery casing to prevent the fire from propagating to another adjacent battery cell or module in the casing.

Technical problems to be solved by the present disclosure are not limited to the above-mentioned technical problems, and other technical problems, which are not mentioned above, may be clearly understood from the following descriptions by those skilled in the art to which the present disclosure pertains.

### [Technical Solution]

In order to achieve the above-mentioned object, the present disclosure provides a battery casing including: a casing body having an internal space in which a battery is embedded; a gas discharge hole formed in the casing body and provided to discharge a gas in the casing body, which is generated from the battery, to the outside of the casing body; and a gas discharge amplifier installed in the gas discharge hole and configured to amplify a flow rate of the gas discharged through the gas discharge hole.

The gas discharge amplifier may include: a gas discharge pipe; and a pressure part provided in the gas discharge pipe and configured to amplify the flow rate of the gas discharged through the gas discharge pipe by introducing a high-pressure gas into the gas discharge pipe.

An inlet of the gas discharge pipe may be connected to an outlet side of the gas discharge hole.

The pressure part may include: a connection part provided in the gas discharge pipe; and a high-pressure provision part configured to provide the high-pressure gas into the gas discharge pipe through the connection part.

The high-pressure provision part may be a connection line configured to connect the internal space of the casing body and the connection part.

The connection line may be integrated with the gas discharge amplifier or the casing body.

The high-pressure provision part may be a gas compressor.

The high-pressure provision part may be an inflator.

When abnormality of the battery is detected, the high-pressure provision part may operate and provide the high-pressure gas into the gas discharge pipe.

A relief valve may be provided at a point between the internal space of the casing body and the gas discharge amplifier, the relief valve may close the gas discharge hole at ordinary times, and the relief valve may be opened when the gas in the casing body has predetermined pressure or higher.

A vane may be provided at an inlet side of the relief valve, and inclined wings may be provided in the vane and generate vortices of the gas introduced into the relief valve.

An inner diameter of the vane may decrease toward the relief valve.

The wings may be provided as a plurality of wings provided on an inner surface of the vane and spaced apart from one another in a circumferential direction.

An installation groove may be formed at an outlet side of the gas discharge hole, and the gas discharge amplifier may include: an introduction part inserted into the installation groove; and a gas discharge pipe extending outward from the introduction part.

The introduction part of the gas discharge amplifier may be opened toward the gas discharge hole, and a relief valve may be inserted into the introduction part.

The relief valve may be installed outside the casing body with the gas discharge hole interposed therebetween, and the vane may be installed inside the casing body.

A baffle configured to reduce a flow velocity of the gas may be provided at an inlet side of the vane.

The baffle may have a through-hole through which the gas flows, and an inclined portion formed to be inclined around the through-hole and configured to reduce the flow velocity of the gas.

A mesh may be provided in the baffle and filter out particulates contained in the gas.

The through-hole of the baffle may be formed in the lower portion of the baffle, and the inclined portion may be inclined downward.

The through-hole of the baffle may be formed at a point facing the vane.

A battery pack and a vehicle of the present disclosure includes the above-mentioned battery casing.

### [Advantageous Effects]

According to the battery casing, the battery pack, and the vehicle including the same of the present disclosure, a high-temperature, high-pressure generated gas may be quickly discharged to the outside of the battery casing even in the event of a fire in some battery cells, modules, assemblies, or the like in the battery casing, such that the secondary propagation of the fire caused by the generated gas may be prevented.

The effects obtained by the present disclosure are not limited to the aforementioned effects, and other effects, which are not mentioned above, will be clearly understood by those skilled in the art from the following description.

### [Description of Drawings]

FIG. 1 is a view illustrating a casing body of a battery casing according to an embodiment of the present disclosure.
FIG. 2 is a view illustrating a relief valve of the battery casing according to the embodiment of the present disclosure.
FIG. 3 is a view illustrating a gas discharge amplifier of the battery casing according to the embodiment of the present disclosure.
FIG. 4 is a view illustrating a state in which the gas discharge amplifier is coupled to the casing body of the battery casing illustrated in FIG. 1.
FIG. 5 is a view illustrating a vane of the battery casing according to the embodiment of the present disclosure.
FIG. 6 is a view illustrating a baffle of the battery casing according to the embodiment of the present disclosure.

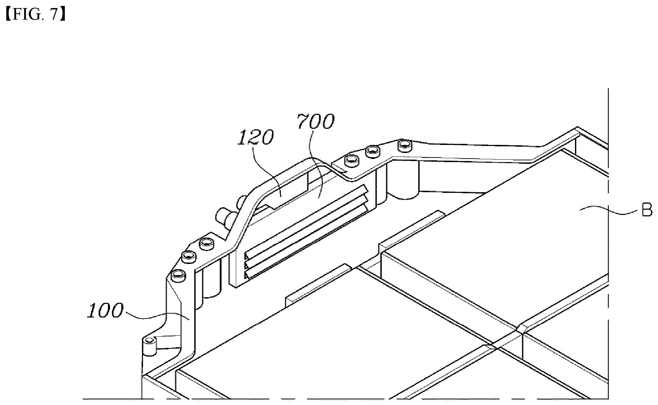

FIG. 7 is a view illustrating a state in which the baffle is coupled to the casing body of the battery casing illustrated in FIG. 1.
FIG. 8 is a view illustrating a cross-section of the battery casing according to the embodiment of the present disclosure.
FIG. 9 is a view illustrating a cross-section of a battery casing according to another embodiment of the present disclosure.
FIG. 10 is a view illustrating a battery casing according to still another embodiment of the present disclosure.

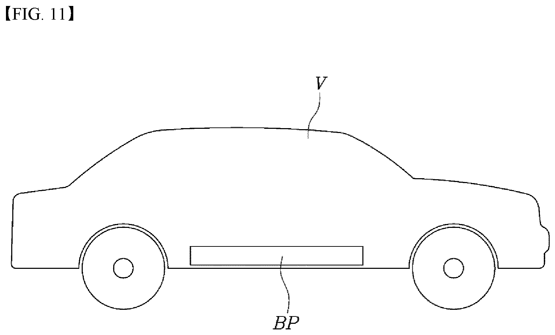

FIG. 11 is a view illustrating a battery pack and a vehicle to which the battery casing of the present disclosure is applied.

### [Best Mode]

In the description of the embodiments disclosed in the present specification, the specific descriptions of publicly known related technologies will be omitted when it is determined that the specific descriptions may obscure the subject matter of the embodiments disclosed in the present specification. In addition, it should be interpreted that the accompanying drawings are provided only to allow those skilled in the art to easily understand the embodiments disclosed in the present specification, and the technical spirit disclosed in the present specification is not limited by the accompanying drawings, and includes all alterations, equivalents, and alternatives that are included in the spirit and the technical scope of the present disclosure.

The terms including ordinal numbers such as "first," "second," and the like may be used to describe various constituent elements, but the constituent elements are not limited by the terms. These terms are used only to distinguish one constituent element from another constituent element. Singular expressions include plural expressions unless clearly described as different meanings in the context.

In the present specification, it should be understood the terms "comprises," "comprising," "includes," "including," "containing," "has," "having" or other variations thereof are inclusive and therefore specify the presence of stated features, integers, steps, operations, elements, components, or combinations thereof, but do not preclude the presence or addition of one or more other features, integers, steps, operations, elements, components, or combinations thereof.

The suffixes "module", "unit", "part", and "portion" used to describe constituent elements in the following description are used together or interchangeably in order to facilitate the description, but the suffixes themselves do not have distinguishable meanings or functions.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

A controller may include a communication device configured to communicate with another control unit or a sensor to control a corresponding function, a memory configured to store an operating system, a logic instruction, and input/output information, and one or more processors configured to perform determination, computation, decision, or the like required to control the corresponding function.

Hereinafter, embodiments disclosed in the present specification will be described in detail with reference to the accompanying drawings. The same or similar constituent elements are assigned with the same reference numerals regardless of the reference numerals, and the repetitive description thereof will be omitted.

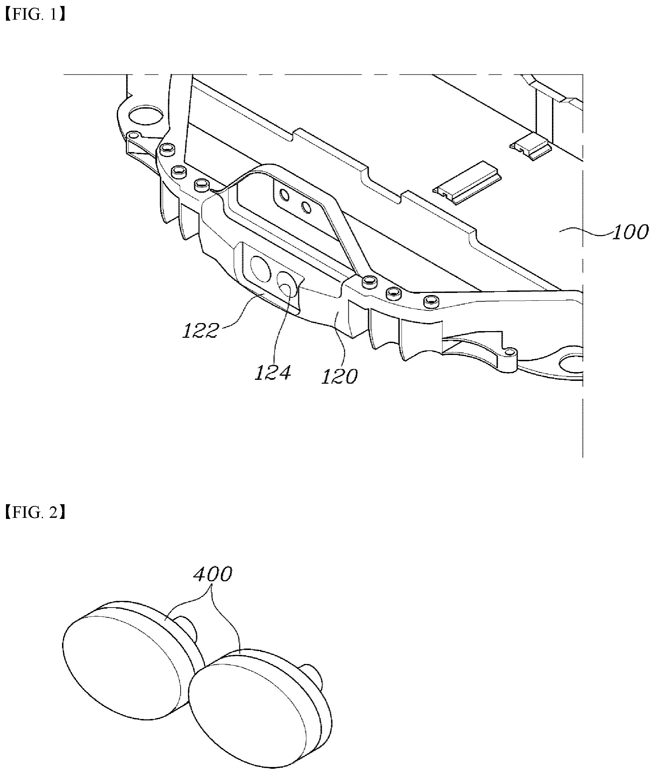

The present disclosure relates to a battery casing, and a battery pack BP and a vehicle V to which the battery casing is applied. The battery casing of the present disclosure will be described with reference to FIG. 1. The battery casing includes a casing body 100 as a main component. The casing body 100 has a hollow structure including a bottom surface and sidewalls configured to surround a periphery of the bottom surface. Further, a plurality of batteries B is mounted in the casing body 100. A plurality of cells are assembled to constitute a module or an assembly of the battery, and the battery is mounted in the form of a battery module or assembly in the casing body 100. Further, a lid is coupled to the casing body 100 and seals the battery casing.

The batteries embedded in the battery casing operate in a desired temperature section in a normal state. However, there are some instances in which the degradation of particular battery cells accelerates because of the aging of the battery, external environmental influences, or manufacturing tolerances. In this case, it is necessary to prevent a secondary fire or explosion at the periphery by venting in advance a gas, which is generated in the battery cell, to the outside. It is necessary to prevent a risk of a fire or the propagation of a fire to another battery cell or module, which is adjacent to a battery cell in which the fire has occurred, by quickly discharging the gas, which is vented from the battery cell, to the outside, thereby preventing a larger fire.

The gas generated from the battery may include flammable particulates and be vented at a high temperature and pressure. Therefore, it is necessary to ensure a high flow rate at a discharge point while reducing a velocity of the discharged gas. By reducing the velocity of the vented gas, the aggressiveness to the inner walls of the battery casing is reduced while a high flow rate is still ensured to prevent the propagation of the fire into the battery casing.

Specifically, the battery casing according to the present disclosure includes the casing body 100 having an internal space in which the battery is embedded, a gas discharge hole 124 formed in the casing body 100 and provided to discharge the gas in the casing body 100, which is generated from the battery B, to the outside of the casing body 100, and a gas discharge amplifier 300 installed in the gas discharge hole 124 and configured to amplify a flow rate of the gas discharged through the gas discharge hole 124.

FIG. 1 illustrates the casing body 100 on which the gas discharge amplifier is not mounted. An installation groove 122 having a predetermined size is formed in a front surface portion 120 of the sidewall of the casing body 100. The installation groove 122 may be formed at various points on the casing body 100 at which the gas may be vented. The position is not limited only to the illustrated front surface portion 120 of the sidewall.

The gas discharge hole 124 is formed in the installation groove 122 formed in the casing body 100. The gas discharge hole 124 serves to allow the inside and outside of the casing body 100 to communicate with each other. The gas discharge hole 124 may be considered as the only portion of the sealed casing body 100 through which the internal gas may be discharged to the outside. Therefore, the battery casing may be sealed, the battery may be stably controlled, and the gas may be safely vented to a desired point when the gas is generated in the battery casing.

The gas discharge hole 124 of the casing body 100 needs to be kept closed at ordinary times. In case that excessive pressure is generated in the casing, the gas discharge hole 124 needs to be opened to eliminate overpressure and discharge the gas to prevent the propagation of a fire. To this end, a relief valve 400 in FIG. 2 is provided in the gas discharge hole 124. The relief valve will be described below.

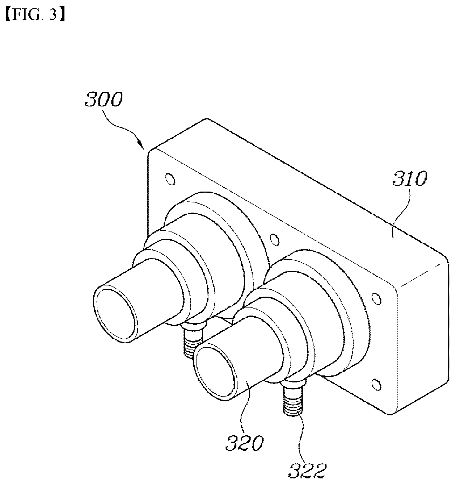

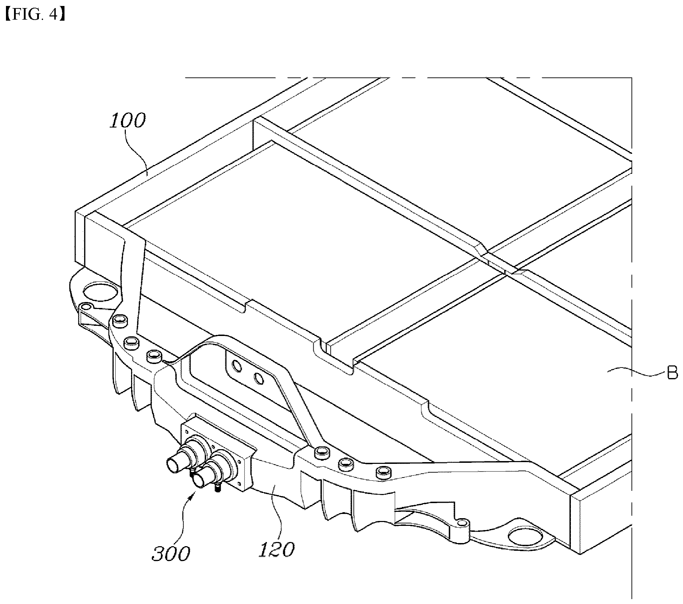

Further, the gas discharge amplifier 300 in FIG. 3 is installed at an outlet side of the relief valve 400. FIG. 4 illustrates the battery casing on which the gas discharge amplifier 300 is installed. The gas in the battery casing is discharged through the relief valve 400 first. Further, the gas having passed through the relief valve 400 is discharged to the outside through the gas discharge amplifier 300 because the fire propagation probability decreases as a high flow rate of the discharged gas is ensured.

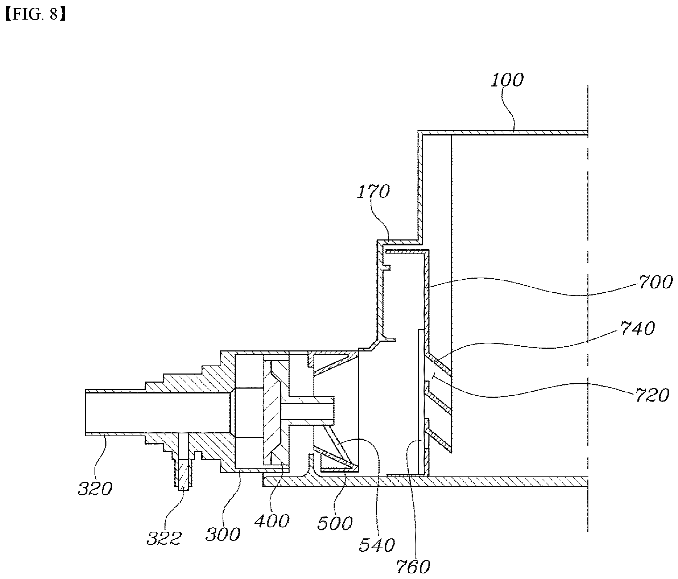

As illustrated in the cross-sectional view in FIG. 8, the gas discharge amplifier 300 may include a gas discharge pipe 320, and a pressure part provided in the gas discharge pipe 320 and configured to introduce a high-pressure gas into the gas discharge pipe 320 to amplify the flow rate of the gas discharged through the gas discharge pipe 320.

The gas discharge amplifier 300 basically includes the gas discharge pipe 320 through which the gas is discharged. Further, the pressure part is connected to the gas discharge pipe 320 so that a high-pressure gas is introduced into the pressure part from the outside. The pressure part may be connected by a connection part 322 such as a nipple. The pressure part supplies a high-pressure gas, and the high-pressure gas is introduced into an inner surface of the gas discharge pipe 320 through a nipple or the like. On the basis of the Bernoulli's theorem, a flow velocity and a flow rate of the vented gas passing through the interior of the gas discharge pipe 320 are increased by the high-pressure external pressure. The gas discharge amplifier 300 may also be called an air amplifier. Various technologies in the related art may be applied to the gas discharge amplifier 300.

The present disclosure is provided to quickly discharge the gas in the battery casing to the outside by further amplifying the flow rate of the vented gas and discharging the gas from the outlet side of the relief valve 400 in the battery casing by utilizing the gas discharge amplifier 300.

To this end, an inlet of the gas discharge pipe 320 of the gas discharge amplifier 300 may be connected to the outlet side of the gas discharge hole 124. Further, the gas discharge pipe 320 has a pipe shape elongated toward the outside of the battery casing. Therefore, the high-temperature, high-pressure gas in the battery is vented at a desired point through the gas discharge hole 124, such that the gas is vented at the desired point through the gas discharge pipe 320 without damaging other components such as a vehicle, thereby minimizing damage to the periphery. Furthermore, because the gas is discharged through the gas discharge amplifier 300, the other batteries in the casing may be protected. Therefore, according to the present disclosure, it is possible to discharge the gas and prevent a fire while ensuring the safety on both the inside and outside of the battery pack BP.

Meanwhile, the pressure part of the gas discharge amplifier 300 may include the connection part 322 provided on the gas discharge pipe 320, and a high-pressure provision part 340 configured to provide a high-pressure gas into the gas discharge pipe 320 through the connection part 322. The connection part 322 may be provided in the form of the illustrated nipple 322 or in the form of a hole 342 integrated with the gas discharge pipe. An external high-pressure gas is introduced into the gas discharge pipe 320 through the connection part 322.

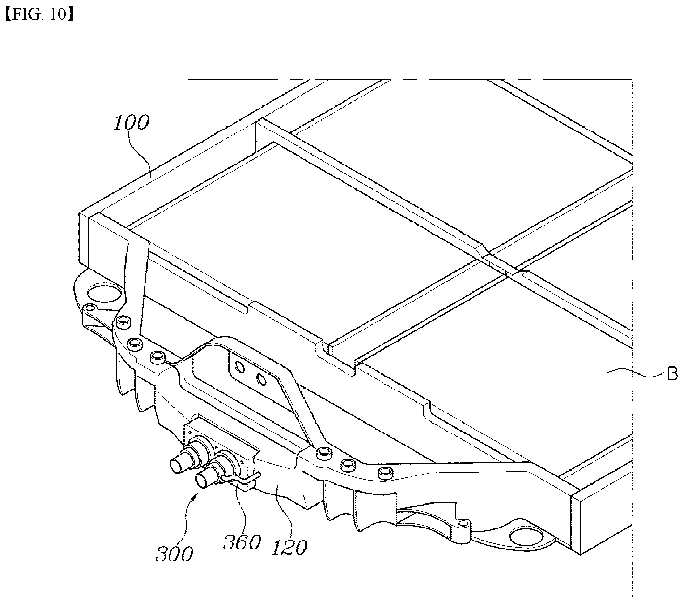

The high-pressure provision part 340 may be a connection line 360 configured to connect the internal space of the casing body 100 and the connection part. The case in which the amplification process of the gas discharge amplifier 300 is required may be a case in which a high-pressure venting gas is generated first in the casing body 100. Therefore, the flow velocity and the flow rate of the gas flowing through the gas discharge pipe 320 are amplified by utilizing the venting gas in the casing body 100. The flow velocity and the flow rate of the gas flowing through the gas discharge pipe 320 are decreased as the gas passes through many components such as a baffle 700, a vane 500, and a valve 400. Therefore, in case that the high-pressure gas is additionally introduced into the casing body 100, the flow rate and the flow velocity of the gas flowing through the gas discharge pipe 320 may be increased. Therefore, in the embodiment of the present disclosure, the connection line 360 may connect the gas discharge pipe 320 and the inside of the casing body 100. In addition, because the high-temperature, high-pressure gas flows through the connection line 360, the connection line 360 may be made of a material such as metal with good heat resistance. Alternatively, as illustrated in FIG. 10, the connection line 360 may be integrated with the gas discharge amplifier 300 or the casing body 100. When the connection line 360 is integrated with the gas discharge amplifier 300 or the casing body 100, it is not necessary to manufacture and assemble a separate connection line, such that manufacturing costs may be reduced. Further, because an assembling error does not occur, the connection line may be more assuredly sealed, such that the gas in the casing body may be safely transmitted to the gas discharge pipe. In this case, the separate connection line 360 is provided on an outer surface of the gas discharge amplifier 300 or the casing body 100. When the gas discharge amplifier 300 or the casing body 100 is formed, the connection line 360 may also be formed in the form of a mold. Alternatively, a separate line may be joined to the gas discharge amplifier 300 or the casing body 100 by welding or the like.

Alternatively, the high-pressure provision part 340 may be a gas compressor. The gas discharge pipe 320 requires a high-pressure gas higher in pressure than the gas originally flowing in the gas discharge pipe 320. Therefore, a separate compressor may be installed in vehicle and thus provide the high-pressure gas into the gas discharge pipe. In this case, outside air may be compressed and provided. In order to prevent the explosion, an inert gas may be supplied from a tank, compressed, and then provided.

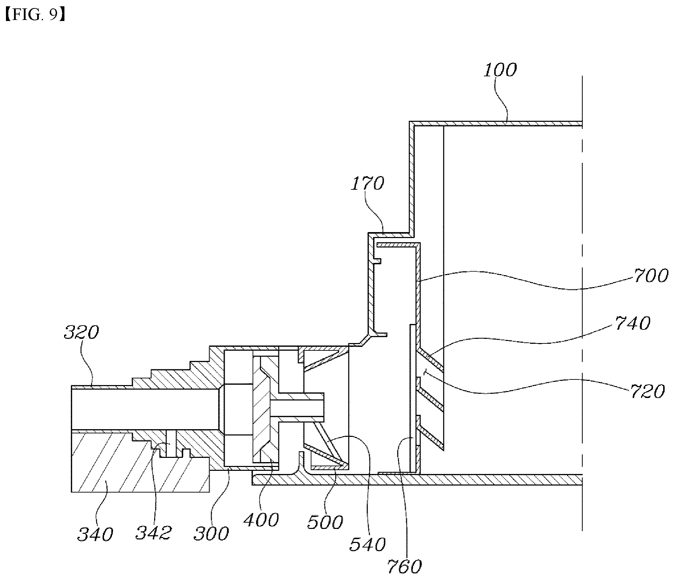

Alternatively, the high-pressure provision part 340 may be an inflator. FIG. 9 illustrates that the inflator 340 is installed adjacent to the gas discharge pipe 320. In this case, the inflator 340 operates in case that when it is detected that the gas needs to be vented from the casing body 100. The inflator 340 is operated by explosive or the like, and the inert gas is instantaneously discharged at high pressure. The gas, which is generated by the inflator 340 as described above, is immediately introduced into the gas discharge pipe 320, such that the gas flowing through the gas discharge pipe 320 is amplified. The inflator 340 is often used for airbags or the like in the current vehicles. The inflator 340 may be fixed to a lateral side of the gas discharge pipe 320 and connected by the connection line, the hole 342, or the like. Because the inflator 340 generates instantaneous pressure in response to an electrical signal, the inflator 340 is very advantageous in terms of a reaction speed. In addition, because a volume and a weight are comparatively small, the inflator may be sufficiently applied without being designed and modified to suit the battery pack in the related art.

Meanwhile, when the abnormality of the battery is detected, the high-pressure provision part 340 operates and provides the high-pressure gas into the gas discharge pipe 320. To this end, a sensor for detecting a fire or pressure needs to be provided in the battery pack, and a controller capable of controlling the high-pressure provision part 340 needs to be provided.

Meanwhile, as illustrated in FIG. 8, the relief valve 400 in FIG. 2 may be provided at a point between the internal space of the casing body 100 and the gas discharge amplifier 300. The relief valve 400 may close the gas discharge hole at ordinary times, and the relief valve 400 may be opened when the gas in the casing body has a predetermined pressure or higher. At ordinary times, a valve stem of the relief valve 400 closes the gas discharge hole 124 by means of an elastic body such as a spring. Further, in case that excessive pressure occurs, the stem is opened while compressing the spring, thereby eliminating the overpressure.

The gas discharge amplifier 300 may have a housing 310 with a box shape, and the relief valve 400 may be mounted in the housing 310. The housing 310 may be mounted in the installation groove 122 of the casing body 100. Further, the gas discharge pipe 320 extends toward a side opposite to the housing 310. Therefore, the gas discharged through the relief valve 400 may entirely flow only to the gas discharge pipe 320 without leaking to the outside.

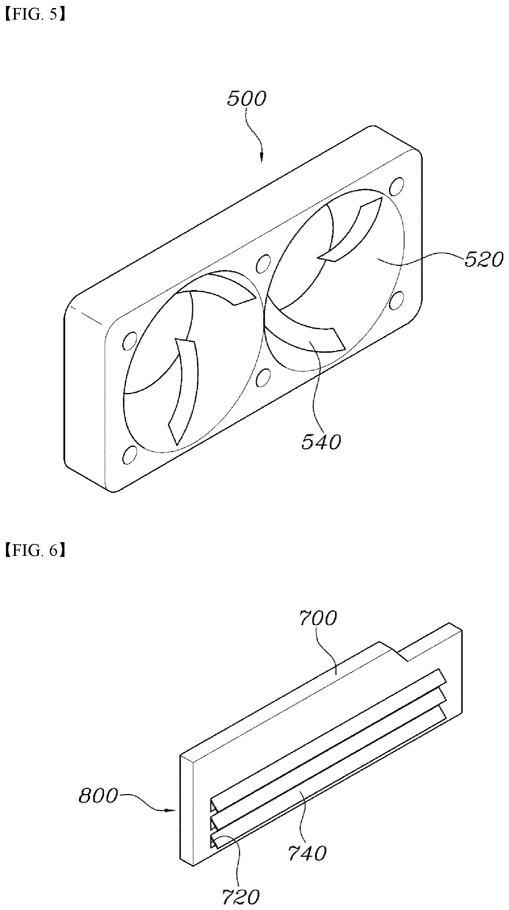

In addition, the vane 500 illustrated in FIG. 5 may be provided at an inlet side of the relief valve 400, and inclined wings 540 may be provided in the vane 500 and generate vortices of the gas introduced into the relief valve 400. Further, an inner diameter of the vane 500 may decrease toward the relief valve 400. The plurality of wings 540 may be provided on an inner surface of the vane 500 and spaced apart from one another in a circumferential direction.

Various shapes may be applied to the vane 500. In case that the interior 520 of the vane 500 has a shape having a diameter that gradually decreases, like a funnel, spiral vortices, like a tornado, may be easily formed. Further, in case that the plurality of inclined wings 540 are provided on the inner surface of the vane 500, stronger vortices are formed in the vane 500. Because the vane 500 generates spiral vortices together with the wings 540 in the vane, the gas with the flow velocity decreased by the baffle 700 may be concentrated in the relief valve 400, thereby sucking the gas around the vane 500. The gas around the vane 500 is quickly concentrated in the relief valve 400 by the shape of the vane 500, such that the propagation of a fire in the battery casing may be quickly prevented.

The housing 310 of the gas discharge amplifier 300 may serve as an introduction part, the introduction part may be opened toward the gas discharge hole 124, and the relief valve 400 may be inserted into the introduction part. Further, the relief valve 400 may be installed outside the casing body 100 with the gas discharge hole 124 interposed therebetween, and the vane 500 may be installed inside the casing body 100.

In particular, as illustrated in FIG. 6, the baffle 700 configured to reduce the flow velocity of the gas may be provided at the inlet side of the vane 500. The baffle 700 may have through-holes 720 through which the gas flows, and inclined portions 740 formed to be inclined around the through-holes 720 and configured to reduce the flow velocity of the gas. Because the gas vented from the battery cell contains flammable particulates, the components of the casing body 100 may be damaged in case that the gas with instantaneous pressure collides directly with the components of the casing body 100. Therefore, a velocity of a gas, which is vented initially, needs to be instantaneously reduced, and the gas needs to be prevented from colliding directly with the gas discharge hole 124. In addition, because damage to a mesh 760 also needs to be prevented to allow the mesh 760 to perform appropriate filtering, the velocity of the gas needs to be reduced first by the baffle 700. To this end, the baffle 700 may have a housing shape having a predetermined area, the through-holes 720 of the baffle 700 may be formed in a lower portion of the baffle 700, and the inclined portions 740 may be inclined downward.

Further, the mesh 760 may be provided in the baffle 700 and filter out particulates contained in the gas. The through-holes 720 of the baffle 700 may be formed at points facing the vane 500.

With the above-mentioned configuration, the baffle 700 is inserted and fixed into a groove 170 of the casing body 100. The mesh 760 is provided in the baffle 700, and the through-holes 720 are formed in the lower portion of the baffle 700, such that the gas is vented to the outside through the lower side of the casing body 100. The vane 500 and the gas discharge hole 124 are formed at the lower side of the casing body 100, such that the gas may be discharged, and the mesh 760 and the inclined portions 740 may protect the vane 500 and the gas discharge hole 124.

The gas generated in the casing body 100 is guided downward first by means of the inclined portions 740 inclined downward and collides with the inclined portions 740, such that the flow velocity of the gas is reduced. In addition, flammable particulates are filtered out while the gas passes through the mesh 760. Thereafter, vortices are generated while the gas passes through the vane 500, and the vortices increase the flow velocity again. The flow velocity, which is decreased as the gas passes through the relief valve 400, is amplified again by the gas discharge amplifier 300, and then the gas is discharged.

Therefore, the flow velocity of the high-temperature, high-pressure gas generated in the battery casing is low at the point at which the gas is required, such that the aggressiveness of the gas is reduced, and the constituent components are protected. Further, the flow velocity and the flow rate are increased at the necessary point, thereby ensuring the overall performance in discharging the gas.

While the specific embodiments of the present disclosure have been illustrated and described, it will be obvious to those skilled in the art that the present disclosure may be variously modified and changed without departing from the technical spirit of the present disclosure defined in the appended claims.

## Claims

1. A battery casing comprising:
a casing body having an internal space in which a battery is embedded;
a gas discharge hole formed in the casing body and provided to discharge a gas in the casing body, which is generated from the battery, to the outside of the casing body; and
a gas discharge amplifier installed in the gas discharge hole and configured to amplify a flow rate of the gas discharged through the gas discharge hole.

2. The battery casing of claim 1, wherein the gas discharge amplifier comprises:
a gas discharge pipe; and
a pressure part provided in the gas discharge pipe and configured to amplify the flow rate of the gas discharged through the gas discharge pipe by introducing a high-pressure gas into the gas discharge pipe and
wherein an inlet of the gas discharge pipe is connected to an outlet side of the gas discharge hole.

3. The battery casing of claim 2, wherein the pressure part comprises:
a connection part provided in the gas discharge pipe; and
a high-pressure provision part configured to provide the high-pressure gas into the gas discharge pipe through the connection part,
wherein when abnormality of the battery is detected, the high-pressure provision part operates and provides the high-pressure gas into the gas discharge pipe.

4. The battery casing of claim 3, wherein the high-pressure provision part comprises a connection line configured to connect the internal space of the casing body and the connection part, and the connection line is integrated with the gas discharge amplifier or the casing body.

5. The battery casing of claim 3, wherein the high-pressure provision part is a gas compressor.

6. The battery casing of claim 3, wherein the high-pressure provision part is an inflator.

7. The battery casing of claim 1, wherein a relief valve is provided at a point between the internal space of the casing body and the gas discharge amplifier, the relief valve closes the gas discharge hole at ordinary times, and the relief valve is opened when the gas in the casing body has predetermined pressure or higher.

8. The battery casing of claim 7, wherein a vane is provided at an inlet side of the relief valve, inclined wings are provided in the vane and generate vortices of the gas introduced into the relief valve, an inner diameter of the vane decreases toward the relief valve, and the wings are provided as a plurality of wings provided on an inner surface of the vane and spaced apart from one another in a circumferential direction.

9. The battery casing of claim 1, wherein an installation groove is formed at an outlet side of the gas discharge hole,
wherein the gas discharge amplifier comprises:
an introduction part inserted into the installation groove; and
a gas discharge pipe extending outward from the introduction part,
wherein the introduction part of the gas discharge amplifier is opened toward the gas discharge hole and
wherein a relief valve is inserted into the introduction part.

10. The battery casing of claim 8, wherein the relief valve is installed outside the casing body with the gas discharge hole interposed therebetween, and the vane is installed inside the casing body.

11. The battery casing of claim 8, wherein a baffle configured to reduce a flow velocity of the gas is provided at an inlet side of the vane, a through-hole through which the gas flows is formed in a lower portion of the baffle, and an inclined portion is formed on the lower portion of the baffle, inclined downward around the through-hole, and configured to reduce the flow velocity of the gas.

12. The battery casing of claim 11, wherein a mesh is provided in the baffle and filters out particulates contained in the gas.

13. The battery casing of claim 12, wherein the through-hole of the baffle is formed at a point facing the vane.

14. A battery pack comprising the battery casing of claim 1.

15. A vehicle comprising the battery pack of claim 14.
